**Europäisches Patentamt**

**European Patent Office**

**Office européen des brevets**

(19)

(11) Numéro de publication: **0 012 646**
**B1**

(12)

# FASCICULE DE BREVET EUROPEEN

(21) Numéro de dépôt: **79400910.0**

(22) Date de dépôt: **23.11.79**

(51) Int. Cl.³: **F 24 J 3/02**

(54) **Dispositif de transfert de l'énergie solaire par un fluide caloporteur, et capteur solaire équipé d'un tel dispositif.**

(30) Priorité: **12.12.78 FR 7834879**

(43) Date de publication de la demande:
**25.06.80 Bulletin 80/13**

(45) Mention de la délivrance du brevet:
**18.03.81 Bulletin 81/11**

(84) Etats Contractants Désignés:
**DE FR GB IT NL**

(56) Documents cités:
**FR - A - 2 296 826**
**FR - A - 2 334 070**
**FR - A - 2 352 262**

(73) Patentinhaber: **COMPAGNIE DES LAMPES**
**29, rue de Lisbonne**
**F-75008 Paris (FR)**

(72) Erfinder: **Mourier, Jean**
**"THOMSON-CSF" - SCPI 173, bld Haussmann**
**F-75360 Paris Cedex 08 (FR)**

(72) Erfinder: **Scoarnec, Louis**
**"THOMSON-CSF" - SCPI 173, bld Haussmann**
**F-75360 Paris Cedex 08 (FR)**

(74) Vertreter: **Dubreuil, Annie, et al**
**"THOMSON-CSF" - SCPI 173, bld Haussmann**
**F-75360 Paris Cedex 08 (FR)**

Courier Press, Leamington Spa, England.

# Dispositif de transfert de l'énergie solaire par un fluide caloporteur, et capteur solaire équipé d'un tel dispositif

L'invention concerne un dispositif de transfert de l'énergie solaire par un fluide caloporteur. Elle concerne également les capteurs solaires équipés d'un tel dispositif.

Parmi les différentes dispositions connues pour résoudre ce problème de transfert, l'une d'elles consiste à utiliser un tube dont une partie est cintrée pour former un élément constitué de deux branches droites reliées entre elles par un raccordement en U, cet élément devant être introduit à l'intérieur du capteur lui-même, chacune de ces branches droites étant à leur tour conformée pour être raccordée en amont et en aval du capteur, à l'extérieur de celui-ci, au circuit général dans leqeul circule le fluide caloporteur. Le fait, dans cette solution, que le circuit du fluide caloporteur soit indépendant mécaniquement du capteur lui-même constitue un avantage appréciable mais entraîne aussi un certain nombre d'inconvénients.

En effet, les techniques actuelles de formage, compte tenu des propriétés physiques des matériaux constituant les tubes, conduisent à des encombrements non négligeables. Ceci a relativement peu d'importance pour les parties du tube situées à l'extérieur du capteur mais il n'en est pas de même pour les parties du tube situées à l'intérieur. Cet encombrement se répercute en effet sur celui du capteur dont le diamètre intérieur de l'enveloppe (partie creuse) doit être choisi en conséquence. De plus, se pose alors un problème de contact thermique, car, seul un échange par conduction peut être envisagé dans ce cas, échange notamment assuré au moyen d'une pièce intermédiaire, le plus souvent métallique telle qu'une ailette par exemple, insérée entre la paroi intérieure du capteur et la paroi extérieure du tube en U.

La présente invention a pour but de pallier ces inconvénients et concerne un dispositif de transfert de l'énergie solaire par un fluide caloporteur dont l'élément destiné à être introduit à l'intérieur de l'enveloppe du capteur solaire est caractérisé en ce qu'il comprend deux tubes, bons conducteurs de la chaleur, comportant chacun une branche droite, ces branches étant placées de façon contigüe, à l'intérieur de cette enveloppe dans le volume libre réservé à cet effet, et occupant la presque totalité de ce volume, les deux extrémités de ces branches, situées à l'intérieur de l'enveloppe étant reliées entre elles au moyen d'un bouchon de raccordement creux, tandis que les autres extrémités de ces mêmes branches sont conformées pour être raccordées à l'extérieur de ce volume libre, en amont et en aval de l'enveloppe, au circuit général de circulation un fluide caloporteur.

Une telle combinaison, en supprimant à l'intérieur de l'enveloppe du capteur tout raccordement en U, permet de ne laisser subsister entre l'intérieur de l'enveloppe et le tube de circulation du fluide caloporteur qu'une mince couche d'air suffisamment conductrice pour assurer un bon transfert des calories entre le capteur et le tube par simple convection. Néanmoins, dans un souci d'efficacité, un manchon en tissu métallique peut coopérer avec la combinaison précédemment décrite pour améliorer, grâce à la création d'un certain nombre de ponts thermiques, l'échange thermique entre l'enveloppe et le circuit de circulation du fluide caloporteur au niveau du dispositif conforme à l'invention.

L'invention sera mieux comprise à l'aide des explications qui vont suivre et des figures jointes parmi lesquelles:
— La figure 1 est une représentation schématique d'un exemple de réalisation d'un dispositif selon l'invention;
— La figure 2 est une coupe selon $A_1 A_2$ de la figure 1;
— Les figures 3 et 4 représentent, vues en coupe, des variantes de réalisation du dispositif de la figure 1.

Pour plus de clarté, les mêmes éléments portent les mêmes références dans toutes les figures.

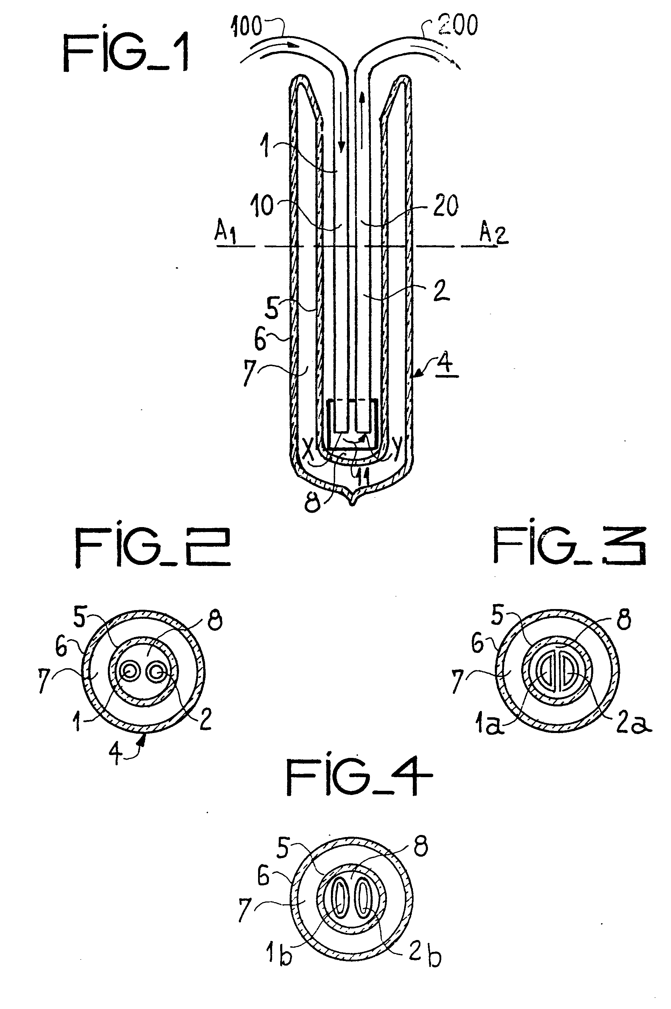

La figure 1 et la figure 2 qui est une coupe selon $A_1 A_2$ de la figure 1 représentent schématiquement un exemple de réalisation d'un dispositif selon l'invention. Le circuit de circulation du fluide caloporteur qui peut être de l'eau, par exemple, est constitué au niveau de chaque capteur par un élément destiné à être introduit à l'intérieur de l'enveloppe du capteur et à être relié au reste du circuit à l'extérieur de cette enveloppe. Un tel élément est un dispositif de transfert des calories du capteur vers le fluide caloporteur selon l'invention. Cet élément comprend deux tubes métalliques 1 et 2 ayant deux branches droites 10 et 20 disposées de manière contigüe à l'intérieur de la partie creuse de l'enveloppe 4 du capteur. Cette enveloppe 4 comprend deux parois 5 et 6 délimitant une enceinte 7 dans laquelle on a fait le vide. Les moyens destinés à capter l'énergie solaire qui normalement sont prévus à l'intérieur de cette enceinte 7 ne sont pas figurés. Comme cela vient d'être dit ci-dessus, dans l'exemple décrit, les deux tubes métalliques 1 et 2 sont constitués de deux branches droites 10 et 20 disposées de façon contigüe et occupant la presque totalité du volume libre 8 de l'enveloppe, délimité par la paroi intérieure 5 de cette dernière. Ces deux extrémités des tubes situées à l'intérieur du capteur sont reliées entre elles selon les techniques connues de la plomberie par un raccord creux 11 qui permet le bon acheminement du fluide, tout en assurant, à ce niveau, une étanchéïté totale avec l'extérieur des tubes. Les deux autres extrémités de ces branches 10 et 20 présentent une partie cintrée 100 et 200 prolongeant respectivement les parties droites et destinée à relier en amont et en aval du capteur ce dispositif ou élément de circuit décrit ci-dessus, au circuit général (non représenté sur la figure) de circulation du fluide caloporteur symbolisée par les flèches sur la figure 1.

Ces parties cintrées peuvent notamment se prolonger à nouveau par d'autres parties droites qui à leur tour seront introduites dans l'enveloppe d'un autre capteur, selon le même agencement que dans l'enveloppe 4 de la figure 1. Il s'agit, dans ce cas, d'une succession de tubes en U avec deux branches droites, la zone de raccordement (partie cintrée) étant située à l'extérieur de l'enveloppe du capteur. La liaison des extrémités droite est assurée comme cela a été dit précédemment au moyen d'un raccord creux tel que 11. Le nombre d'opérations de cintrage se limite alors à une seule pour chaque tube.

La figure 3 représente, vue en coupe, une variante de réalisation d'un dispositif selon l'invention décrit au moyen des figures 1 et 2. Dans le précédent exemple, la section des tubes 1 et 2 était circulaire, dans le cas présent, le profil de cette section pour chaque tube 1a et 2a est semi-circulaire. Les deux branches du dispositif présentent chacune une face plane et les deux branches sont alors placées dans l'enveloppe, face plane contre face plane.

Le coefficient de remplissage de la partie creuse 8 de l'enveloppe du carter se trouve encore améliorée.

Comme le montre la figure 4, le profil des tubes 1b et 2b peut également être oval. Il est dans ce cas obtenu notamment par pressage d'un tube de section circulaire. Ces opérations sont effectuées, de préférence sur des tubes en U à branches droites obtenues par cintrage d'un tube rectiligne. Cet agencement des tubes selon l'invention permet l'utilisation, pour un diamètre donné de la partie creuse (volume libre) de l'enveloppe du capteur, d'un diamètre initial de tube rectiligne supérieur à celui qui devrait être utilisé, si, au lieu d'avoir recours au raccord creux tel que 11, on avait dû réaliser à ce niveau un raccordement en U. Il en résulte notamment deux avantages importants. D'une part, une augmentation de l'efficacité du transfert thermique entre la paroi intérieure de l'enveloppe et le circuit du fluide caloporteur est obtenue grâce à la réduction du volume d'air compris entre ces deux parties: on utilise ainsi la propriété conductrice de l'air, en jouissant d'un bon échange thermique par convection, sans qu'il soit absolument indispensable de recourir à un contact intime soit direct soit par l'intermédiaire d'une pièce bonne conductrice de la chaleur. D'autre part, l'augmentation de la section interne du circuit du fluide caloporteur conduit à une réduction de la perte de charge dans ce circuit.

Comme cela a été dit précédemment, l'agencement des tubes à l'intérieur du capteur constituant le dispositif de transfert de l'énergie solaire conforme à l'invention permet normalement de s'affranchir de l'utilisation de moyens intermédiaires de conduction thermique. Cependant, dans un souci de plus grande efficacité, on peut être amené à améliorer encore les bonnes conditions initiales d'échange par convention définies ci-dessus, entre la paroi intérieure de l'enveloppe et le circuit du fluide caloporteur. Pour cela on utilise un élément se présentant comme un doigt de gant réalisé en tricot métallique, qui entoure sur toute leur longueur les branches du circuit placées dans la partie creuse de l'enveloppe, remplissant ainsi les interstices subsistant entre l'intérieur de l'enveloppe et les branches du dispositif. Le tricot métallique est constitué de fil en métal bon conducteur thermique, de quelques diziemes de millimètres de diamètre. Les mailles sont suffisamment laches pour remplir par élasticité l'espace compris entre la paroi intérieure de l'enveloppe et le circuit du fluide caloporteur réalisant ainsi un grand nombre de ponts thermiques également répartis. On allie ainsi au procédé d'échange thermique par convection un procédé d'échange par conduction.

Les dispositifs de transfert de l'énergie solaire conformes à l'invention sont destinés à équiper des capteurs solaires et se prêtent particulièrement à l'assemblage d'un grand nombre de ces capteurs pour former par exemple des panneaux de capteurs solaires.

**Revendications**

1. Dispositif de transfert de l'énergie solaire par un fluide caloporteur du type comportant un circuit général de circulation du fluide caloporteur dont au moins un élément est destiné à être introduit à l'intérieur d'une enveloppe (4) de capteur solaire, caractérisé en ce que cet élément comprend deux tubes (1, 1a, 1b, 2, 2a, 2b) bons conducteurs de la chaleur comportant chacun une branche droite (10, 20), ces deux branches étant placées, de manière contiguë, à l'intérieur de cette enveloppe (4), dans le volume libre (8) réservé à cet effet, et occupant la presque totalité de ce volume; les deux extrémités de ces branches situées à l'intérieur de l'enveloppe étant reliées entre elles au moyen d'un bouchon de raccordement creux (11), tandis que les autres extrémités de ces mêmes branches sont cintrées (100, 200), et destinées à être reccordées, à l'extérieur de ce volume libre, en amont et en aval de l'enveloppe, au circuit général de circulation de fluide caloporteur.

2. Dispositif de transfert selon la revendication 1, caractérisé en ce que la section droite de chacune des branches (1, 2) est circulaire.

3. Dispositif de transfert selon la revendication 1, caractérisé en ce que la section droite de chacune des branches (1a, 2a) est semi-circulaire, les deux branches présentant une face plane et une face arrondie, et étant placées, face plane contre face plane.

4. Dispositif de transfert selon la revendication 1, caractérisé en ce que la section droite de chacune des branches (1b, 2b) est ovale.

5. Dispositif de transfert selon l'une revendications précédentes, caractérisé en ce que les deux tubes sont métalliques.

6. Dispositif de transfert selon l'une revendications précédentes, caractérisé en ce que les interstices subsistant entre l'intérieur de l'enveloppe et l'élément introduit dans celle-ci est rempli au moyen d'un tricot métallique constituant un grand nombre de ponts thermiques entre l'enveloppe et les tubes.

7. Capteur solaire équipé d'un dispositif de transfert de l'énergie solaire selon l'une des revendications précédentes.

## Claims

1. Appliance for transfer of solar energy by heat transfer fluid of the type including a general circuit for circulation of heat transfer fluid of which at least one element is for introducing to the inside of a sun trap jacket (4), characterised in that the element includes two tubes (1, 1a, 1b, 2, 2a, 2b) which are good heat conductors each having a straight part (10, 20), the two parts (10, 20) being placed in a contiguous manner to the inside of said jacket (4) in the free space (8) reserved for this purpose, and occupying nearly the whole of said space; the two ends of said parts situated inside the jacket being connected together by means of a hollow joining stopper (11), whilst the other ends of the same parts are curved (100, 200) and are to be connected outside said free space, upstream and downstream of the jacket to the general circuit for circulation of the heat transfer fluid.

2. Appliance according to claim 1 characterised in that the section of each of the parts (1, 2) is circular.

3. Appliance according to claim 1 characterised in that the section of each of the parts (1a, 2a) is semi-circular, the two parts having a planar face and a rounded face, and are arranged with the planar face against each other.

4. Appliance according to claim 1 characterised in that the section of each of the parts (1b, 2b) is oval.

5. Appliance according to one of the preceding claims characterised in that two tubes are of metal.

6. Appliance according to one of the preceding claims characterised in that the interstices existing between the interior of the jacket and the element inserted into it, are filled by means of a metal mesh forming a large number of thermal bridges between the jacket and the tubes.

7. Sun trap having an appliance for solar energy transfer according to one of the preceding claims.

## Patentansprüche

1. Vorrichtung zur Übertragung von Sonnenenergie durch ein Wärmeübertragungsfluid, wobei die Vorrichtung zu dem Typ gehört, der einen allgemeinen Kreislauf des Wärmeübertragungsfluids aufweist, von dem wenigstens ein Element zum Einführen in das Innere eines Mantels (4) des Solarkollektors bestimmt ist, dadurch gekennzeichnet, daß dieses Element zwei gut wärmeleitende Rohre (1, 1a, 1b, 2, 2a, 2b) aufweist, die jedes einen geraden Schenkel (10, 20) aufweisen, wobei diese beiden Schenkel einander berührend im Inneren dieses Mantels (4) in dem zu diesem Zweck vorgesehenen freien Volumen angeordnet sind und fast dieses gesamte Volumen einnehmen und wobei die zwei im Inneren des Mantels angeordneten Enden dieser Schenkel untereinander mittels eines hohlen Verbindungsstopfens (11) verbunden sind, während die anderen Enden (100, 200) der gleichen Schenkel gebogen und zum Anschluß an den allgemeinen Kreislauf des Wärmeübertragungsfluids stromaufwärts und stromabwärts vom Mantel und außerhalb des freien Raumes vorgesehen sind.

2. Energieübertragungsvorrichtung nach Anspruch 1, dadurch gekennzeichnet, daß der Querschnitt jedes der Schenkel (1a, 2a) mig ist.

3. Energieübertragungsvorrichtung nach Anspruch 1, dadurch gekennzeichnet, daß der querschnitt jedes der Schenkel (1a, 2a) halbkreisförmig ist, wobei die beiden Schenkel eine ebene Fläche und eine abgerundete Fläche aufweisen und ebene Fläche gegen ebene Fläche angeordnet sind.

4. Energieübertragungsvorrichtung nach Anspruch 1, dadurch gekennzeichnet, daß der Querschnitt jedes der Schenkel (1b, 2b) oval ist.

5. Energieübertragungsvorrichtung nach einem der vorhergehenden Ansprüche, dadurch gekennzeichnet, daß die zwei Rohre Metallrohre sind.

6. Energieübertragungsvorrichtung nach einem der vorangehenden Ansprüche, dadurch gekennzeichnet, daß die zwischen dem Inneren des Mantels und dem in diesen eingesetzten Element verbleibende Zwischenräume mittels eines Metallgewebes ausgefüllt sind, das eine große Zahl von Wärmebrücken zwischen dem Mantel und den Rohren bildet.

7. Solarkollektor, der mit einer Sonnenenergieübertragungsvorrichtung nach einem der vorangehenden Ansprüche ausgerüstet ist.

0 012 646

FIG_1

FIG_2

FIG_3

FIG_4

1